# EUROPÄISCHE PATENTSCHRIFT

(11) **EP 0 414 837 B1**
(45) Veröffentlichungstag und Bekanntmachung des Hinweises auf die Patenterteilung: **03.11.1993**
(21) Anmeldenummer: 90901749.3
(22) Anmeldetag: 20.01.1990
(51) Int. Cl.: G01F 1/00, G01F 3/00, G01F 15/06

(54) **SENSOR ZUR VOLUMENBESTIMMUNG VON FLÜSSIGEN ODER GASFÖRMIGEN MEDIEN**
SENSOR FOR DETERMINING THE VOLUME OF LIQUID OR GASEOUS MEDIA
CAPTEUR POUR MESURER LE VOLUME DE MILIEUX LIQUIDES OU GAZEUX

(30) Priorität: 24.02.1989 DE 3905676
(43) Veröffentlichungstag der Anmeldung: 06.03.1991
(73) Patentinhaber: ROBERT BOSCH GMBH, 70442 Stuttgart (DE)
(72) Erfinder: WOCHER, Berthold, D-7250 Leonberg (DE); STEINLECHNER, Siegbert, D-7250 Leonberg-Warmbronn (DE)
(86) Internationale Anmeldenummer: DE9000031
(87) Internationale Veröffentlichungsnummer: WO9010197

(56) Entgegenhaltungen:
- GB-A- 2 076 162
- US-A- 3 104 549
- US-A- 4 837 500
- Patent Abstracts of Japan, Band 10, Nr. 68, P437, Zusammenfassung von JP 60-209116

## Beschreibung

### Stand der Technik

Die Erfindung geht aus von einem Sensor zur Volumenbestimmung nach der Gattung des Hauptanspruchs. Bei bekannten Mengensensoren wird ein als eine erste Elektrode dienender Kolben von der zu bestimmenden Flüssigkeit verschoben. An der Wandung des Zylinders ist eine zweite Elektrode angeordnet. Aufgrund der Verschiebung der beiden Elektroden zueinander wird die Kapazität der Elektroden zueinander verändert, so daß eine Volumenbestimmung der Flüssigkeitsmengen auf eine Spannungsmessung zurückgeführt werden kann. Diese Mengensensoren weisen aber für die Kraftstoffzufuhr von modernen Brennkraftmaschinen keinen ausreichend genauen und linearen Zusammenhang zwischen der Verschiebung des Kolbens und der Flüssigkeitsmenge auf. Ferner sind induktive Wegmeßsysteme bekannt, die nach dem Transformatorprinzip arbeiten. Diese Systeme weisen zwar eine zwischen zwei Sekundärspulen angeordnete Primärspule auf, aber für den Meßkolben ist ein relativ schweres ferromagnetisches Material notwendig. Diese Systeme können nicht direkt in den Flüssigkeitsstrom eingesetzt werden, sondern die Bewegung eines Meßkolbens muß mit Hilfe eines Gestänges auf ein zusätzliches Meßsystem übertragen werden.

Aus der GB-A-2 076 162 ist ein Durchflußmesser bekannt, bei dem die durchgeströmte Flüssigkeitsmenge proportional zur Verschiebung eines Kolbens ist. Dieser Kolben ist mit Hilfe eines Gestänges mit einer Meßeinrichtung verbunden. Die Meßeinrichtung arbeitet nach dem kapazitiven Prinzip, wobei ein Schaft proportional zur Bewegung des Kolbens zwischen zwei Kondensatorplatten bewegt wird. Diese Meßeinrichtung baut aber sehr aufwendig und eignet sich nur schwer zur Bestimmung der Kraftstoffzufuhr in Kraftfahrzeugen.

### Vorteile der Erfindung

Der erfindungsgemäße Sensor zur Volumenbestimmung mit den kennzeichnenden Merkmalen des Hauptanspruchs hat demgegenüber den Vorteil, daß eine direkte Mengenmessung möglich ist, ohne daß erst über ein Gestänge eine Übertragung des mechanischen Signals zu einer zusätzlichen Umwandlungseinrichtung in ein elektrisches Signal notwendig ist. Es ist eine schnelle und genaue Messung der Flüssigkeitsmenge möglich, da der Kolben eine sehr geringe Masse aufweisen kann. Über einen sehr großen Bereich ist das Flüssigkeitsvolumen proportional zur Auslenkung des Kolbens. Der Ausdehnungskoeffizient des Kolbens kann dem des Rohrs entsprechen, so daß keine unterschiedlichen Wärmeausdehnungen stattfinden können. Dadurch kann der Kolben weder im Rohr verklemmen, noch kann eine Leckage zwischen dem Rohr und dem Kolben entstehen. Die Elektroden können in einfachen, preisgünstigen und modernen Verfahren auf das Rohr bzw. auf den Kolben aufgedampft werden. Dank der kleinen, nahezu verlustfreien Kapazitäten ist der Energieverbrauch sehr gering. Zum Kolben braucht keine elektrische Kontaktierung geführt werden.

Durch die in den Unteransprüchen aufgeführten Maßnahmen sind vorteilhafte Weiterbildungen und Verbesserungen der im Hauptanspruch angegebenen Merkmale möglich.

### Zeichnung

Ein Ausführungsbeispiel der Erfindung ist in der Zeichnung dargestellt und in der nachfolgenden Beschreibung näher erläutert. Es zeigen Figur 1 einen Längsschnitt durch einen Sensor, Figur 2 ein elektrisches Ersatzschaltbild des Sensors, Figur 3 die Verschaltung der Sensorelemente mit Spannungsquellen zu einer Brückenschaltung, die Figuren 4a und 4b je eine besondere Ausbildung des Kolbens, Figur 5 eine besondere Ausbildung der Erregerelektroden und Figur 6 eine Abwandlung des Sensors.

### Beschreibung des Ausführungsbeispiels

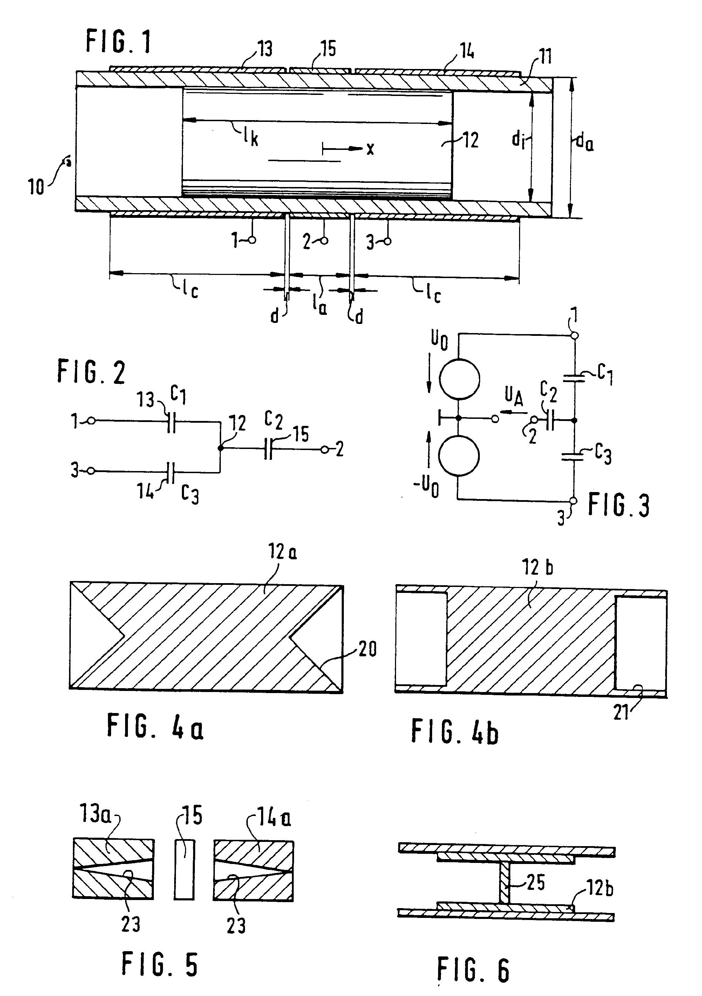

In der Figur 1 ist mit 10 ein Sensor zur Volumenbestimmung bezeichnet, der aus einem Rohr 11 und einem in diesem gleitend bewegbaren Kolben 12 mit der Länge lₖ besteht. Das Rohr 11 ist ein Glasrohr, wobei aber jedes andere nicht leitende Material verwendet werden kann. Auf dem Rohr 11 sind zwei Elektroden 13, 14 aus metallischem Material mit der Länge l_{c} angeordnet, die als Erregerelektroden dienen. Zwischen den beiden Elektroden 13, 14 ist eine Elektrode 15 mit der Länge lₐ befestigt, die als Abgriffselektrode verwendet wird. Der Spaltabstand d zwischen den Erregerelektroden 13, 14 und der Abgriffselektrode 15 sollte möglichst klein gewählt werden, um eine genaue Messung durchführen zu können, andererseits muß er aber so groß sein, daß keine Spannungsübetschläge zwischen den Erregerelektroden 13, 14 und der Abgriffselektrode 15 möglich sind. Der Kolben 12 muß aus metallischem Material bestehen oder eine elektrisch leitende Beschichtung aufweisen. Es ist so z.B. auch moglich, einen Glaskolben zu verwenden, auf dem eine Metallschicht aufgebracht ist. Der Kolben 12 wird im Rohr 11 durch den Flüssigkeitsstrom hin- und hergeschoben. In der Ausgangsstellung ist der Kolben 12 so angeordnet, daß er die Elektroden 13 und 14 jeweils gleich überlappt. Dadurch bilden sich zwischen dem Kolben 12 und den beiden Elektroden 13, 14 jeweils gleiche Kapazitäten C₁ und C₃ aus. Figur 2 zeigt das elektrische Ersatzschaltbild des Sensors, indem die veränderlichen Kapazitäten C₁ und C₃ und die konstante Kapazität C₂ zwischen dem Kolben 12 und der Abgriffselektrode 15 eingezeichnet sind. In Figur 3 sind die Kapazitäten C₁ und C₃ und die beiden Wechselspannungsquellen +U₀ und -U₀ zu einer Brückenschaltung verbunden, wobei die Kapazität C₂ in der Brückendiagonalen liegt.

Wird der Kolben 12 vom Flüssigkeitsstrom aus seiner Ausgangsstellung bewegt, so wird die Überdeckung zwischen der Elektrode 13 und dem Kolben 12 bzw. dem Kolben 12 und der Elektrode 14 zwar um den gleichen Betrag, aber gegensinnig verändert. Dadurch ändern sich die Kapazitäten C₁ und C₃ ebenfalls gegensinnig linear mit der Auslenkung x des Kolbens 12. Zur Auswertung liegen an den Elektroden 13 und 14 zwei gegenphasige Wechselspannungen mit der Amplitude U₀ und einer Frequenz im kHz-Bereich an. Sind die Kapazitäten C₁ und C₃ verschieden, d.h. ist der Kolben 12 nicht mehr in der Ausgangsstellung, so wird der Kolben 12 zu einer elektrischen Schwingung angeregt. Für eine negative Verschiebung x , d.h. fur x < 0, wobei C₁ > C₃ ist, ist die Spannung am Kolben 12 in Phase mit der Erregerspannung U₀. Für den umgekehrten Fall, wenn eine positive Verschiebung vorliegt, d.h. wenn x > 0 ist und somit die Kapazität C₁ < C₃ ist, so ist die Spannung am Kolben 12 in Gegenphase mit der Erregerspannung U₀. Die Amplitude der Spannung am Kolben 12 ist direkt proportional zur Verschiebung x des Kolbens 12. Über die Kapazität C₂ an der Abgriffselektrode 15 wird diese Spannung U_{A} ausgekoppelt und kann über eine elektronische Auswerteschaltung ausgewertet werden.

Ein optimales Verhältnis zwischen dem nutzbaren Weg ± xₘₐₓ und der Baulänge des Sensors 10 ergibt sich, wenn die Länge lₐ der Abgriffselektrode 15 möglichst klein gewählt wird und der Kolben 12 die Länge lₖ = l_{c} + lₐ + 2d hat. Der maximal nutzbare Weg ± xₘₐₓ entspricht dann der halben Länge der Erregerelektroden 13, 14. Bekanntlich läßt aufgrund elektrischer Randfeldeffekte die Linearität der Meßwerte an den Grenzen der maximalen Auslenkung der Elektroden nach. Deshalb sollte für genaue Messungen nicht der ganze übliche Meßbereich ausgenutzt werden. Um die Effekte von elektrischen Randfeldlinien zu reduzieren, ist es aber auch möglich, wie in Figur 4a bzw. b dargestellt, daß der Kolben 12a, b kegelige (20) oder zylindrische Vertiefungen 21 an den Stirnflächen aufweist. Hierdurch wird auch ein nennenswerter Einfluß der Dielektrizitätskonstante des flüssigen Mediums auf das Meßergebnis vermieden.

Die Länge lₐ der Abgriffselektrode sollte möglichst klein gewählt werden. Sie kann jedoch nicht beliebig klein sein, da sonst die Kapazität C₂ zu gering wäre. Der minimal notwendige Wert der Kapazität C₂ und damit indirekt die Länge lₐ wird durch die Empfindlichkeit der jeweils verwendeten Auswerteschaltung bestimmt.

Die Linearität des Sensors 10 kann aber auch noch erhöht werden, indem die Erregerelektroden 13a, 14a, wie in Figur 5 gezeigt, von der Abgriffselektrode 15 sich jeweils verjüngende Ausnehmungen 23 aufweisen. Diese Ausnehmungen 23 müssen dann auf beiden Seiten gleich aber gegensinnig ausgebildet sein. In den Bereichen der maximalen Auslenkung ± xₘₐₓ müssen die störenden Randfeldeinflüsse gerade kompensiert werden.

In einer weiteren Abwandlung des Ausführungsbeispiels nach der Figur 6 ist es auch moglich, den Kolben 12b als eine Hülse mit einer mittigen Trennwand 25 auszubilden. Dadurch kann die Masse des Kolbens 12b noch weiter reduziert werden und somit eine noch genauere Messung erreicht werden.

Mit Hilfe des Sensors können sowohl flüssige als auch gasförmige Medien gemessen werden. Besonders vorteilhaft kann der Sensor in der Einspritzanlage einer Brennkraftmaschine eingebaut werden.

## Patentansprüche

1. Sensor (10) zur Volumenbestimmung von flüssigen oder gasförmigen Medien, insbesondere des Kraftstoffs für Brennkraftmaschinen, mit einem kapazitiven Positionsaufnehmer bestehend aus einem Rohr (11), mit einem vom Medium verschobenen Kolben (12) und mindestens einer auf dem Rohr (11) angeordneten und mit dem Kolben (12) zur Erzeugung eines Meßsignals zusammenwirkenden Elektrode (13, 14, 15), dadurch gekennzeichnet, daß mindestens eine erste Abgriffselektrode (15) und zu deren beiden Seiten in Bewegungsrichtung gesehen mindestens je eine Erregerelektrode (13, 14) vorgesehen ist, wobei die Erregerelektroden (13, 14) mit Wechselspannungsquellen (+U₀, -U₀) eine Brückenschaltung bilden und die Abgriffselektrode(15) in der Brückendiagonale liegt.

2. Sensor nach Anspruch 1, dadurch gekennzeichnet, daß in der Ausgangsstellung des Kolbens (12) die zwischen dem Kolben (12) und den Erregerelektroden (13, 14) sich bildenden Kapazitäten (C₁, C₃) nahezu gleich sind.

3. Sensor nach Anspruch 1 und/oder 2, dadurch gekennzeichnet, daß die Erregerelektroden (13, 14) mit zwei gegenphasigen Wechselspannungen gespeist sind.

4. Sensor nach einem der Ansprüche 1 bis 3, dadurch gekennzeichnet, daß der Kolben (12a, b) an beiden Stirnseiten kegelige oder zylindrische Vertiefungen aufweist.

5. Sensor nach einem der Ansprüche 1 bis 4, dadurch gekennzeichnet, daß die Erregerelektroden (13, 14) von der Abgriffselektrode (15) ausgehend sich verjüngende Ausnehmungen aufweisen.

6. Sensor nach einem der Ansprüche 1 bis 5, dadurch gekennzeichnet, daß das Rohr (11) ein Glasrohr ist, auf dem die Abgriffs- (15) und die Erregerelektroden (13, 14) aus einer leitenden Schicht galvanisch, drucktechnisch, vakuumtechnisch oder klebetechnisch aufgebracht sind.

7. Sensor nach einem der Ansprüche 1 bis 6, dadurch gekennzeichnet, daß der Kolben (12b) aus einer Hülse mit einer etwa mittigen Trennwand (25) besteht.

8. Sensor nach einem der Ansprüche 1 bis 7, dadurch gekennzeichnet, daß der Sensor (10) Teil einer Einspritzanlage einer Brennkraftmaschine ist.

## Claims

1. Sensor (10) for the determination of the volume of liquid or gaseous media, in particular of fuel for internal combustion engines, having a capacitive position detector comprising a tube (11), and having a piston (12) displaced by the medium and at least one electrode (13, 14, 15) disposed on the tube (11) and interacting with the piston (12) to generate a measurement signal, characterised in that at least a first take-off electrode (15) and, on both sides thereof viewed in the direction of movement, at least one exciting electrode (13, 14) in each case is [sic] provided, the exciting electrodes (13, 14) forming a bridge circuit with alternating-voltage sources (+U₀, -U₀) and the take-off electrode (15) being situated in the bridge diagonal.

2. Sensor according to Claim 1, characterised in that, in the initial position of the piston (12), the capacitances (C₁, C₃) formed between the piston (12) and the exciting electrodes (13, 14) are virtually equal.

3. Sensor according to Claim 1 and/or 2, characterised in that the exciting electrodes (13, 14) are fed with two alternating voltages which are in phase opposition.

4. Sensor according to one of Claims 1 to 3, characterised in that the piston (12a, b) has conical or cylindrical recesses on both end faces.

5. Sensor according to one of Claims 1 to 4, characterised in that the exciting electrodes (13, 14) have recesses which taper, starting from the take-off electrode (15).

6. Sensor according to one of Claims 1 to 5, characterised in that the tube (11) is a glass tube to which the take-off electrode (15) and the exciting electrodes (13, 14) which are composed of a conducting layer, have been applied by electroplating, by printing procedures, by vacuum procedures or by bonding procedures.

7. Sensor according to one of Claims 1 to 6, characterised in that the piston (12b) comprises a sleeve having an approximately central partition (25).

8. Sensor according to one of Claims 1 to 7, characterised in that the sensor (10) is part of an injection system of an internal combustion engine.

## Revendications

1. Capteur (10) pour la détermination du volume de milieux liquides ou gazeux, notamment du carburant alimentant des moteurs thermiques avec un capteur de position, capacitif, composé d'un tube (11) avec un piston (12) déplacé par le fluide et au moins une électrode (13, 14, 15) prévue sur le tube (11) et coopérant avec le piston (12) pour générer un signal de mesure, capteur caractérisé par au moins une première électrode de détection (15) et des deux côtés dans le sens de déplacement, chaque fois au moins une électrode d'excitation (13, 14), les électrodes d'excitation (13, 14) formant un montage en pont avec des sources de tension alternative (+U₀, -U₀) et l'électrode de détection (15) se trouvant dans la diagonale du pont.

2. Capteur selon la revendication 1, caractérisé en ce que les capacités (C₁, C₃) qui se forment entre le piston (12) et les électrodes d'excitation (13, 14) sont pratiquement égales lorsque le piston (12) est en position de sortie.

3. Capteur selon la revendication 1 et/ou 2, caractérisé en ce que les électrodes d'excitation (13, 14) sont alimentées par des tensions alternatives en opposition de phase.

4. Capteur selon l'une des revendications 1 à 3, caractérisé en ce que le piston (12a, b) possède sur les deux faces frontales des cavités coniques ou cylindriques.

5. Capteur selon l'une des revendications 1 à 4, caractérisé en ce que les électrodes d'excitation (13, 14) comportent des cavités allant en diminuant à partir ce l'électrode de détection (15).

6. Capteur selon l'une des revendications 1 à 5, caractérisé en ce que le tube (11) est un tube en verre portant l'électrode de détection (15) et les électrodes d'excitation (13, 14) appliquées sous la forme d'une couche conductrice par un procédé galvanique, d'impression, de dépôt sous vide ou de collage.

7. Capteur selon l'une des revendications 1 à 6, caractérisé en ce que le piston (12b) se compose d'un manchon avec une cloison (25) sensiblement en son milieu.

8. Capteur selon l'une des revendications 1 à 7, caractérisé en ce que le capteur (10) fait partie d'une installation d'injection du moteur thermique.
